## Europäisches Patentamt

## European Patent Office

## Office européen des brevets

(11) Veröffentlichungsnummer: **0 207 194 B1**

(12) **EUROPÄISCHE PATENTSCHRIFT**

(45) Veröffentlichungstag der Patentschrift:
03.05.89

(51) Int. Cl.⁴: **F 16 F 13/00**, F 16 F 1/38

(21) Anmeldenummer: **85116443.4**

(22) Anmeldetag: **21.12.85**

(54) **Axial belastbares Lager.**

(30) Priorität: **25.05.85 DE 3519016**

(43) Veröffentlichungstag der Anmeldung:
**07.01.87 Patentblatt 87/2**

(45) Bekanntmachung des Hinweises auf die Patenterteilung:
**03.05.89 Patentblatt 89/18**

(84) Benannte Vertragsstaaten:
**BE FR GB IT NL SE**

(56) Entgegenhaltungen:
**EP-A- 0 038 062**
**EP-A- 0 044 908**
**FR-A- 922 441**
**FR-A- 2 255 508**
**GB-A- 2 041 486**
**GB-A- 2 105 438**

(73) Patentinhaber: **Boge A.G., Bogestrasse 50,
D-5208 Eitorf/Sieg (DE)**

(72) Erfinder: **Schiffner, Klaus, Himmelsburger Strasse 141,
D-5483 Bad Neuenahr-Ahrweiler (DE)**
Erfinder: **Quast, Jörn-Rainer, Am Kurgarten 64,
D-5485 Sinzig 2 (DE)**
Erfinder: **Gäb, Gerd, Neuenahrer-Strasse 32, D-5483 Bad
Neuenahr-Ahrweiler (DE)**

ACTORUM AG

**Beschreibung**

Die Erfindung bezieht sich auf ein axial und radial belastbares und in axialer Richtung hydraulisch dämpfendes Lager zur elastischen Lagerung von Maschinen, Maschinenteilen und/oder Fahrzeugteilen, bestehend aus einem Innenteil, einem im Abstand dazu angeordneten Außenteil sowie zwei zwischen Innen- und Außenteil angeordneten Gummifedern, wobei die Gummifedern einen umlaufenden, mit Dämpfungsflüssigkeit gefüllten Ringraum bilden und ein ringförmiger, eine Drossel aufweisender Trennkörper den Ringraum in zwei Ringräume unterteilt und aus einem starren, auf dem Innenteil geführten Schiebeteil, einem starren mit dem Außenteil fest verbundenen Befestigungsteil besteht und die Drossel durch eines der starren Teile gebildet wird.

Es sind axial und radial belastbare Lager bekannt (z.B. FR-A 2 255 508), welche in axialer Richtung hydraulisch dämpfen und die zwischen einem Innenteil und einem Außenteil einen mit Dämpfungsflüssigkeit gefüllten Ringraum bilden. Der den Ringraum in zwei einzelne Ringräume unterteilende Trennkörper besteht aus einem starren, auf dem Innenteil geführten Schiebeteil und einem starren mit dem Außenteil fest verbundenen Befestigungsteil, wobei in einem der starren Teile eine Drossel vorgesehen ist. Bei diesem Lager bleibt der Drosselquerschnitt auch bei überlagerten kardanischen Bewegungen konstant; jedoch sind hierzu Schiebeteile notwendig, die verschleißanfällig sind. Derartige Schiebeteile neigen bei engem Spiel zum Klemmen und Verkanten bei axialer und überlagerter kardanischer Bewegung, wobei bei zu großem Spiel undefinierte Spalte zwischen den Schiebeteilen die Drosselwirkung nachteilig beeinflussen.

Weiter sind Lager bekannt (z.B. DE-PS 30 28 631, DE-PS 30 50 710, FR-PS 922 441), bei denen eine axial belastbare Hülsengummifeder zur elastischen Lagerung von Maschinen oder Maschinenteilen aus einer glatten Innenhülse und einer Außenhülse besteht und bei der die Gummifedern einen umlaufenden und mit Dämpfungsflüssigkeit gefüllten Ringraum bilden, der durch einen ringförmigen Trennkörper zwei über einen umlaufenden Drosselspalt miteinander in Verbindung stehende Ringkammer aufweist. Diese Lager können einerseits Torsions- und Verkantungsbeanspruchungen aufnehmen, und ein solches Lager sieht neben einer axial elastischen federnden Lagerung zur Vermeidung von Resonanzschwingungen mit großen Amplituden noch eine zusätzliche integrierte hydraulische Dämpfung zum Auffangen von axial eingeleiteten Stößen vor. Die beiden Kammern stehen durch eine Drosselöffnung miteinander in Verbindung, die einerseits durch den aus Kunststoff bestehenden Trennkörper und andererseits durch die benachbarte innere Wandung des Hohlraums begrenzt ist. Bei derartigen Lagern wirken sich jedoch kardanische Beanspruchungen ungünstig auf den Drosselspalt aus. Bei überlagerten kardanischen Bewegungen kann es zu undefinierten Drosselquerschnitten des Drosselspaltes kommen, so daß eine exakte gleichbleibende hydraulische Dämpfung nicht gegeben ist.

Aufgabe der Erfindung ist es, ein einfaches kostengünstiges axial belastbares Lager zu schaffen, welches aus wenigen verschleißarmen Teilen besteht und welches gleichzeitig radiale und kardanische Einfederungen problemlos, klemmfrei aufnehmen kann, wobei der exakte Querschnitt der Drossel bestehen bleibt.

Zur Lösung dieser Aufgabe ist erfindungsgemäß vorgesehen, daß ein am Schiebeteil und am Befestigungsteil fixierter Schubgummi vorgesehen ist.

Vorteilhaft ist bei dieser Ausbildung, daß bei Anordnung der Drossel in einem der starren Teile ständig konstante Bedingungen für die Dämpfung herrschen. Die elastische Verbindung des Schiebeteiles und des Befestigungsteiles über den Schubgummi gewährleistet eine axiale Dämpfung, wobei eine gleichzeitige radial und kardanische Einfederung der Gummikörper aufgefangen werden kann, ohne daß ein Klemmen oder Verkanten des Trennkörpers oder undefinierte Spalte der Drossel zu befürchten sind. Außerdem ist kein Verschleiß der Bauteile aufzufangen.

Nach einem weiteren wesentlichen Merkmal ist vorgesehen, daß das Schiebeteil und/oder das Befestigungsteil im Querschnitt winkelförmig ausgebildet ist. Dabei läßt sich besonders günstig der Schubgummi axial sich erstreckend anordnen.

Als einfache kostengünstige Ausführung des Trennkörpers ist die Drossel als Bohrung im Schiebeteil und/oder Befestigungsteil ausgebildet.

In Ausgestaltung der Erfindung ist vorgesehen, daß die Drossel aus mindestens einer zwischen dem Innenteil und dem Schiebeteil verlaufenden Nut, Kanal oder dergleichen besteht. Dabei kann ohne weiteres vorgesehen werden, daß der Kanal Bestandteil des Schiebeteiles oder des Innenteiles ist.

Eine weitere Ausführungsform des Trennkörpers sieht vor, daß die Drossel als Lagerspalt des auf dem Innenteil geführten Schiebeteiles ausgebildet ist.

Zum Abbau von Resonanzen oder zur Erzielung einer Phasenverschiebung während der Dämpfung sieht eine besonders günstige Ausführungsform vor, daß der Kanal schraubenförmig um das Innenteil verläuft und in der Innenfläche des Schiebeteiles angeordnet ist.

Eine einwandfreie flüssigkeitsdichte Abdichtung zwischen dem Schiebeteil und dem Befestigungsteil ist gewährleistet, wenn der Schubgummi im Bereich der einander zugewandten Enden der starren Teile anvulkanisiert ist.

In Ausgestaltung der Erfindung läßt sich vorsehen, daß der Schubgummi mit dem Schiebeteil und dem Befestigungsteil fest aber lösbar verbunden ist. Eine solche Verbindung könnte beispielsweise durch Einknöpfen des Schubgummis in Nuten der entsprechenden zu verbindenden Teile erfolgen.

Darüber hinaus kann vorgesehen sein, daß das Schiebeteil über ein Gleitlager auf dem Innenteil geführt ist.

Bevorzugte Ausführungsbeispiele der Erfindung sind in den Zeichnungen schematisch dargestellt.

Es zeigt:

Fig. 1 ein axial belastbares Lager im Schnitt,

Fig. 2 eine Ansicht des in Figur 1 dargestellten Lagers,

Fig. 3 bis 9 Einzelheiten des Schiebeteiles und einer jeweiligen Ausführungsform einer Drossel im Schnitt.

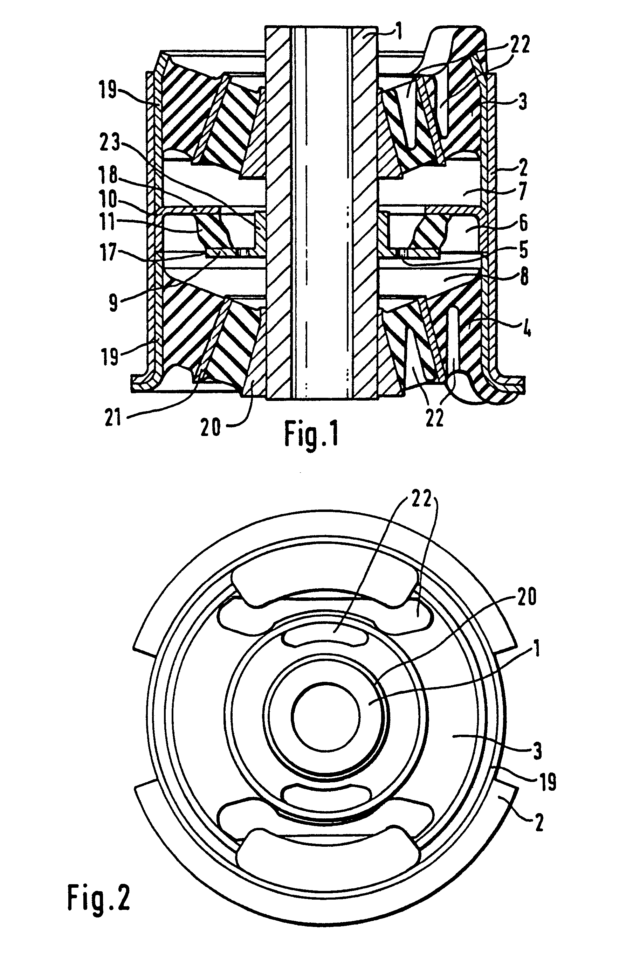

Das in Figur 1 dargestellte axial und radial belastbare und in axialer Richtung hydraulisch dämpfendes Lager besteht im wesentlichen aus dem Innenteil 1, dem Außenteil 2 sowie den Gummifedern 3 und 4. Die Gummifedern 3 und 4 sind in ihrem Außenbereich an ein Blechteil 19 und an ihrem Innendurchmesser an einen Ring 20 anvulkanisiert. Das Blechteil 19 dient der festen Fixierung gegenüber der Außenhülse, wobei der Ring 20 auf das Innenteil aufgepreßt ist. Zusätzlich können Armierungsbleche 21 in der Gummifeder vorgesehen werden. Zwischen den Blechteilen 19 der Gummifedern 3 und 4 ist in axialer Richtung das Befestigungsteil 10 aufgenommen. Durch das Befestigungsteil 10, dem Schubgummi 11 und dem Schiebeteil 9 wird der Hohlraum zwischen dem Innenteil 1 und der Außenhülse 2 in zwei Ringräume 7 und 8 unterteilt. Diese Ringräume 7 und 8 sind mit Dämpfungsflüssigkeit gefüllt. Der Trennkörper 6, bestehend aus dem Schiebeteil 9, dem Befestigungsteil 10 und dem Schubgummi 11 gestattet ein Flüssigkeitsaustausch zwischen den Ringräumen 7 und 8 lediglich über die Drossel 5. Das Schiebeteil 9 ist auf dem Innenteil 1 axial beweglich geführt, so daß über den elastischen Schubgummi 11 kein Verkanten oder Verklemmen auch bei radial und kardanisch überlagerten Einfederungen auftreten kann. Die axialen Belastungen werden durch Einfedern aufgefangen, so daß durch eine Änderung des Volumens eines Ringraumes 7 oder 8 die Dämpfungsflüssigkeit über die Drossel 5 in den benachbarten Ringraum ausweichen muß.

Zur Erzielung unterschiedlicher Kennlinien sind in den Gummifedern 3 und 4 zusätzlich Ausnehmungen 22 angeordnet, die je nach Anordnung eine weiche Federung zulassen. An Stellen des Umfanges, an denen diese Ausnehmungen nicht vorgesehen sind, werden harte Federungen erzielt. Es ist allerdings durchaus möglich, diese Ausnehmungen 22 über den gesamten Umfang verlaufen zu lassen.

Bei der in Figur 2 gezeigten Ansicht ist das Innenteil 1 durch die Gummifeder 3 umgeben, wobei das Außenteil 2 mit den Gummifedern über die Blechteile 19 und die Innenhülse 1 über den Ring 20 verbunden ist. Das Innenteil 1 dient der Befestigung der Maschinen- oder Fahrzeugteile.

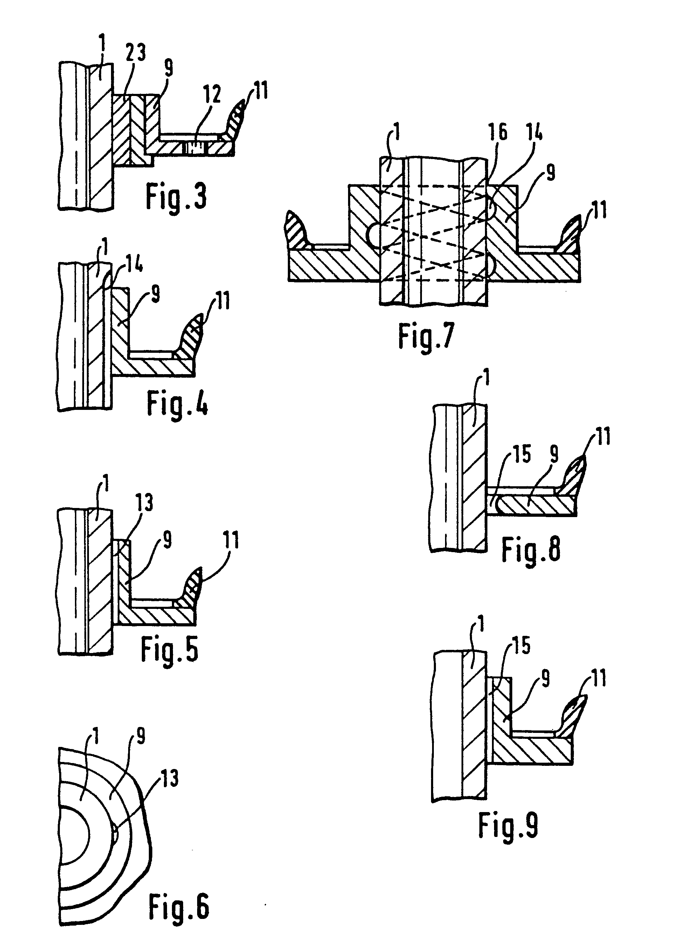

In der Figur 3 ist als Einzelheit ein Teil des Innenteiles 1 gezeigt, wobei das Schiebeteil 9 die Drossel in Form einer Bohrung 12 vorsieht. Der Schubgummi 11 ist lediglich teilweise angedeutet. Das Schiebeteil 9 ist auf dem Innenteil 1 über ein Gleitlager 23 geführt, wobei dieses Gleitlager z.B. aus Teflon/Bronze oder Kunststoff, Bronze oder Stahl mit Spielpassung bestehen kann.

Die Figur 4 zeigt eine weitere Ausführungsform, bei der das Schiebeteil 9 auf dem Innenteil 1 geführt ist und die Drossel als Kanal 14 ausgebildet ist. Dieser Kanal 14 verläuft auf der Außenfläche des Innenteiles 1, wogegen das Schiebeteil 9 eine zylindrische Innenbohrung besitzt.

Die Figur 5 und 6 zeigen wiederum ein Schiebeteil 9, welches auf dem Innenteil 1 geführt ist und wobei die Drossel als eine oder mehrere über den Umfang des Schiebeteiles verteilt angeordnete Nuten 13 bestehen kann.

Auch in der Figur 7 ist im Schiebeteil 9 als Drossel ein Kanal 14 vorgesehen, der jedoch auf der zylindrischen Innenfläche 16 des Schiebeteiles 9 mit einer Steigerung spiralförmig um das Innenteil 1 herum verläuft. Dabei lassen sich die Steigung wie auch der Querschnitt des Kanales 14 entsprechend der gewünschten Drosselwirkung variieren.

Die Figur 8 zeigt zwischen dem Innenteil 1 und dem Schiebeteil 9 als Drossel einen Spalt 15, wobei auch dieser Spalt 15 entsprechend der geforderten Dämpfwirkung ausgelegt werden kann. Die Figur 9 dagegen ist mit einem Lagerspalt 15 versehen, der sich über die gesamte axiale Länge des Schiebeteiles 9 erstreckt. Bei allen Ausführungsformen der Figuren 3 bis 9 ist eine Vulkanisation des Schubgummis 11 mit dem Schiebeteil 9 vorgesehen.

*Bezugszeichenliste*
1   Innenteil
2   Außenteil
3   Gummifeder
4   Gummifeder
5   Drossel
6   Trennkörper
7   Ringraum
8   Ringraum
9   Schiebeteil
10  Befestigungsteil
11  Schubgummi
12  Bohrung (Drossel)
13  Nut (Drossel)
14  Kanal (Drossel)
15  Lagerspalt (Drossel)
16  zylindrische Innenfläche des Schiebeteiles
17  Ende des Schiebeteiles
18  Ende des Befestigungsteiles
19  Blechteil
20  Ring
21  Armierungsblech
22  Ausnehmung
23  Gleitlager

**Patentansprüche**

1. Axial und radial belastbares und in axialer Richtung hydraulisch dämpfendes Lager zur elastischen Lagerung von Maschinen, Maschinenteilen und/oder Fahrzeugteilen, bestehend aus einem Innenteil (1), einem im Abstand dazu angeordneten Außenteil (2) sowie zwei zwischen Innen- und Außenteil angeordneten Gummifedern (22), wobei die Gummifedern einen umlaufenden, mit Dämpfungsflüssigkeit gefüllten Ringraum bilden und ein ringförmiger, eine Drossel aufweisender Trennkörper den Ringraum in zwei Ringräume (7, 8) unterteilt und aus einem starren, auf dem Innenteil geführten Schiebeteil (9), einem starren mit dem Außenteil fest verbundenen Befestigungsteil (10) besteht und die Drossel (5) durch eines der starren Teile (9, 10) gebildet wird, dadurch gekennzeichnet, daß ein am Schiebeteil (9) und am Befestigungsteil (10) fixierter Schubgummi (11) vorgesehen ist.

2. Lager nach Anspruch 1, dadurch gekennzeichnet, daß das Schiebeteil (9) und/oder das Befestigungsteil (10) im Querschnitt winkelförmig ausgebildet ist.

3. Lager nach Anspruch 1, dadurch gekennzeichnet, daß die Drossel (5) als Bohrung (12) ausgebildet ist.

4. Lager nach Anspruch 1, dadurch gekennzeichnet, daß die Drossel (5) aus mindestens einer zwischen dem Innenteil (1) und dem Schiebeteil (9) verlaufenden Nut (13), Kanal (14) oder dergleichen besteht.

5. Lager nach Anspruch 4, dadurch gekennzeichnet, daß der Kanal (14) Bestandteil des Schiebeteiles (9) oder des Innenteiles (1) ist.

6. Lager nach Anspruch 1, dadurch gekennzeichnet, dass die Drossel (5) als Lagerspalt (15) des auf dem Innenteil (1) geführten Schiebeteiles (9) ausgebildet ist.

7. Lager nach Anspruch 4, dadurch gekennzeichnet, daß der Kanal (14) schraubenförmig um das Innenteil (1) verläuft und in der Innenfläche (16) des Schiebeteiles (9) angeordnet ist.

8. Lager nach Anspruch 1, dadurch gekennzeichnet, daß der Schubgummi (11) im Bereich der einander zugewandten Enden (17, 18) des Schiebeteiles (9) und des Befestigungsteiles (10) anvulkanisiert ist.

9. Lager nach Anspruch 1, dadurch gekennzeichnet, daß der Schubgummi (11) mit dem Schiebeteil (9) und dem Befestigungsteil (10) fest aber lösbar verbunden ist.

10. Lager nach Anspruch 1, dadurch gekennzeichnet, daß das Schiebeteil (9) über ein Gleitlager (23) auf dem Innenteil (1) geführt ist.

## Claims

1. Axially and radially loaded bearing with hydraulic damping in an axial direction, for the resilient mounting of machines, machine components and/or vehicle components, comprising an inner part (1), an outer part (2) arranged spaced from it and two rubber springs (22) arranged between the inner and outer part, the rubber springs forming a circumferentially extending annular space filled with damping fluid and a ring-shaped dividing body having a throttle point and dividing the annular space into two annular chambers (7, 8) and a rigid slide member (9) guided on the inner part, a rigid attachment member (10) rigidly connected to the outer part and the throttle point (5) being formed in one of the rigid members (9, 10), characterised in that, a rubber body (11) in shear is provided, connected to the slide member (9) and to the attachment member (10).

2. Bearing according to claim 1, characterised in that, the slide member (9) and/or the attachment member (10) is formed of angled shape in cross section.

3. Bearing according to claim 1, characterised in that, the throttle point (5) is in the form of a hole (12).

4. Bearing according to claim 1, characterised in that, the throttle point (5) comprises at least one groove (13), passage (14) or the like extending between the inner part (1) and the slide member (9).

5. Bearing according to claim 4, characterised in that, the passage (14) is a component part of the slide member (9) or the inner part (1).

6. Bearing according to claim 1, characterised in that, the throttle point (5) is formed as a bearing clearance (15) of the slide member (9) where it is guided on the inner part (1).

7. Bearing according to claim 4, characterised in that, the passage (14) extends helically around the inner part (1) and is arranged in the inner surface (16) of the slide member (9).

8. Bearing according to claim 1, characterised in that, the rubber (11) in shear is vulcanised to the region of the mutually facing ends (17, 18) of the slide member (9) and of the attachment member (10).

9. Bearing according to claim 1, characterised in that, the rubber (11) in shear is rigidly but detachably connected to the slide member (9) and the attachment member (10).

10. Bearing according to claim 1, characterised in that, the slide member (9) is guided on the inner part (1) on a sliding bearing (23).

## Revendications

1. Support pouvant être chargé axialement et radialement, fournissant un amortissement hydraulique en direction axiale, pour supporter élastiquement des machines, parties de machines et/ou parties de véhicules, constitué par une partie intérieure (1), par une partie extérieure (2) agencée à distance de celle-ci, et par deux ressorts en caoutchouc (3, 4) agencés entre partie intérieure et partie extérieure, ces ressorts en caoutchouc formant un espace annulaire de révolution rempli de liquide d'amortissement, un élément séparateur annulaire, doté d'un étranglement, subdivisant l'espace annulaire en deux espaces annulaires (7, 8) et étant constitué par une pièce coulissante (9) rigide guidée sur la partie intérieure, et par une pièce de fixation rigide (10) solidarisée à la partie extérieure, l'étranglement (5) étant formé au travers de l'une des pièces rigides (9, 10), caractérisé par le fait qu'il est prévu un caoutchouc de poussée (11) fixé à la pièce coulissante (9) et à la pièce de fixation (10).

2. Support selon revendication 1, caractérisé par le fait que la pièce coulissante (9) et/ou la pièce de fixation (10) posséde une section droite en forme d'angle.

3. Support selon revendication 1, caractérisé par le fait que l'étranglement (5) est aménagé en tant que trou (12).

4. Support selon renvendication 1, caractérisé par le fait que l'étranglement (5) est constitué par au moins une rainure (13), un canal (14) ou analogue, passant entre la partie intérieure (1) et la pièce coulissante (9).

5. Support selon revendication 4, caratérisé par le fait que le canal (14) fait partie de la pièce coulissante (9) ou de la partie intérieure (1).

6. Support selon revendication 1, caractérisé par le fait que l'étranglement (5) est réalisé sous la forme d'un interstice de portée (15) de la pièce de coulissante (9) guidée sur la partie intérieure (1).

7. Support selon revendication 4, caractérisé par le fait que le canal (14) suit un trajet hélicoïdal autour de la partie intérieure (1) et est agencé dans la surface intérieure (16) de la pièce coulissante (9).

8. Support selon revendication 1, caractérisé par le fait que le caoutchouc de poussée (11) est rapporté-vulcanisé dans la région des extrémités tournées l'une vers l'autre (17, 18) de la pièce coulissante (9) et de la pièce de fixation (10).

9. Support selon revendication 1, caractérisé par le fait que le caoutchouc de poussée (11) est solidarisé, toutefois amoviblement, à la pièce coulissante (9) et à la pièce de fixation (10).

10. Support selon revendication 1, caractérisé par le fait que la pièce coulissante (9) est guidée sur la partie intérieure (1) par l'intermédiaire d'un palier de glissement (23).

Fig.1

Fig.2

Fig.3

Fig.4

Fig.5

Fig.6

Fig.7

Fig.8

Fig.9